# EUROPÄISCHE PATENTSCHRIFT

(11) **EP 1 012 013 B1**
(45) Veröffentlichungstag und Bekanntmachung des Hinweises auf die Patenterteilung: **21.01.2004**
(21) Anmeldenummer: 98950030.1
(22) Anmeldetag: 14.09.1998
(51) Int. Cl.: B60S 1/04

(54) **FORMTEIL MIT EINEM ZAPFEN**
SHAPED PART WITH A SPIGOT
PIECE FACONNEE POURVUE D'UNE BROCHE

(30) Priorität: 12.09.1997 DE 19740067
(43) Veröffentlichungstag der Anmeldung: 28.06.2000
(73) Patentinhaber: Valeo Wischersysteme GmbH, 74321 Bietigheim-Bissingen (DE)
(72) Erfinder: DEHGHAN-MANSHADI, Jahangir, D-74535 Mainhardt-Ammertsweiler (DE); KOLEV, Dimiter, D-70374 Stuttgart (DE); KAPITZA, Harald, 71642 Ludwigsburg (DE); NOACK, Klaus-Peter, D-74182 Obersulm (DE)
(74) Vertreter: Dreiss, Fuhlendorf, Steimle & Becker
(86) Internationale Anmeldenummer: PCT/EP1998/005824
(87) Internationale Veröffentlichungsnummer: WO 1999/014086

(56) Entgegenhaltungen:
- EP-A- 0 694 455
- WO-A-96/26024
- DE-A- 2 920 899
- DE-A- 19 540 869
- FR-A- 2 670 730
- GB-A- 2 218 622
- US-A- 4 523 872

## Beschreibung

Die Erfindung betrifft ein Formteil mit einem zapfen zur Verbindung mit einem Rohr, wobei der Zapfen mehrere in Richtung seiner Längsachse angeordnete Mulden aufweist. Die Erfindung ist anwendbar auf dem Gebiet der Fügetechnik, insbesondere auf dem Gebiet der Fahrzeugtechnik und dort auf Scheibenwischeranlagen.

Scheibenwischeranlagen von Fahrzeugen sind häufig modular aufgebaut. Dabei ist jeweils ein Wischerlager mit einem zapfen ausgestattet, der in einem als Rohr ausgebildeten Träger befestigt ist. Das Rohr verbindet das Wischerlager mit dem wischermotor. Die Befestigung des Rohrs auf dem Zapfen erfolgt durch plastische Verformung des Rohrs, was auch als Verkrimpung bezeichnet wird. Die Verkrimpung sorgt dafür, daß zwischen dem Zapfen und dem Rohr Kräfte und Momente übertragen werden können.

Aus der, DE 29, 20, 899 ist eine Scheibenwischeranlage mit einem gattungsgemäßen Formteil und einem rohrformigen Träger bekannt, der auf einem Ansatz bzw. zapfen eines Wischerlagers befestigt ist. Der Zapfen weist quer zu seiner Längsachse vier muldenförmige Aussparungen auf, von denen sich jeweils zwei gegenüberliegen. In die Aussparungen ist mit einem Stempel, der komplementär zur Muldenform ausgebildet ist, Trägermaterial eingedrückt, das im ganzen vertieften Bereich den Zapfen berührt.

Bei der bekannten Wischeranlage kann es passieren, daß sich die Verbindung zwischen Zapfen und Rohr bei der Kraft- oder Momentenübertragung löst. Dies kann insbesondere bei großen Temperaturwechseln der Fall sein. Dabei können Temperaturen von -40°C bis +120°C auftreten. Ein Lösen der Verbindung kann aber auch bei langanhaltender Betätigung der Scheibenwischeranlage erfolgen oder dann, wenn die Wischer beispielsweise durch Schnee und Eis blockiert sind. Ein Lösen der Verbindung zwischen zapfen und Rohr führt zu einer starken Geräuschentwicklung beim Betrieb der Wischeranlage, die nicht akzeptabel ist.

Der Erfindung liegt daher das Problem zugrunde, ein Formteil mit einem Zapfen bereitzustellen, welches die vorstehend genannten Nachteile überwindet. Insbesondere soll ein Lösen der Verbindung zwischen Zapfen und Rohr verhindert werden, und zwar auch bei extremen Randbedingungen.

Das Problem wird durch das in dem unabhängigen Patentanspruch offenbarte Formteil gelöst. Besondere Ausführungsarten der Erfindung sind in den Unteransprüchen offenbart.

Das Problem ist bei einem Formteil mit einem zapfen zur Verbindung mit einem Rohr, wobei der Zapfen mehrere in Richtung seiner Längsachse angeordnete Mulden aufweist, dadurch gelöst, daß zwei benachbarte Mulden jeweils durch zwei Nasen voneinander getrennt sind, die sich quer zur Längsachse des Zapfens erstrecken. Eine im Rahmen der vorliegenden Erfindung durchgeführte FEM-Berechnung der oben geschilderten bekannten Lösung hat ergeben, daß die Art und der Grad der Umformung einen großen Einfluß auf Instabilitäten der Verkrimpung hat. Bei der bekannten Technik wird in einigen Bereichen keine vollständige Plastifizierung erreicht. Dies führt zu hohen Restspannungen nach der Werkzeugentlastung. Diese Spannungen bauen sich zu Druckspannungen auf und führen unter äußeren Belastungen zu einem instabilen Spannungszustand im Rohrstück und verursachen zusätzlich eine Formabweichung von der Sollkontur. Die Kontaktflächen zwischen dem Zapfen und dem Rohr sind nicht ausreichend ausgebaut und können zu einem Lösen der Verbindung führen. Die erfindungsgemäße Trennung der Mulden durch die Nasen hat zur Folge, daß vor der Werkzeugentlastung Druckspannungen von Zugspannungen umschlossen werden, die vom Betrag her größer als die Druckspannungen sind. Diese durch die Muldengeometrie bedingten Spannungsdifferenzen und -verteilungen sind von Vorteil, da sich die Spannungen nach der Werkzeugentlastung umkehren. Das bedeutet, daß sich die Zug- in Druckspannungen, d.h. in Richtung des Inneren der Mulde, und die Druckin Zugspannungen, also weg vom Kern, umwandeln. Die vom Betrag her größeren Zugspannungen wirken den umschlossenen Druckspannungen entgegen und resultieren in einer guten homogenen Druckspannungsverteilung auf dem Kern. Dadurch ergibt sich eine stabile Verkrimpung im Muldenbereich.

Eine besondere Ausführungsart der Erfindung ist dadurch gekennzeichnet, daß die Nasen jeweils zwei Nasenflügel aufweisen, die ausgehend von den Rändern der Mulden zunächst konkav und dann konvex gekrümmt sind. Die konkav/konvexen Übergänge zwischen den Mulden wirken Axialbelastungen entgegen. Durch diese Übergänge wird erreicht, daß ein "Verkrallen" des Rohrmaterials um den zapfen eintritt. Dieser Effekt wird durch entgegengesetzte Druckspannungen in den konkaven Bereichen erzielt. Durch die konvexen Übergänge wird ein stabiler Gleichgewichtszustand erreicht.

Eine weitere besondere Ausführungsart der Erfindung ist dadurch gekennzeichnet, daß der Zapfen mindestens drei Mulden aufweist, und in der mittleren von den drei Mulden ein Stülpzug in Längsrichtung des Zapfens angeordnet ist. Der Stülpzug gewährleistet eine bessere Verfestigung der mittleren Mulde und ermöglicht dadurch eine Homogenisierung der Spannungsverteilung im Boden. Das hat zur Folge, daß der Bodenbereich nach der werkzeugentlastung nicht vom Zapfen abhebt.

Eine weitere besondere Ausführungsart der Erfindung ist dadurch gekennzeichnet, daß in der Nähe des Zapfens ein Fangloch angeordnet ist. Durch das Fangloch wird eine exakte Positionierung des Zapfens zum Stempel des Werkzeugs erreicht. Dadurch ist eine zufriedenstellende Umformung des Rohrs gewährleistet.

Eine weitere besondere Ausführungsart der Erfindung ist dadurch gekennzeichnet, daß die Mulden auf gegenüberliegenden Seiten des Zapfenumfangs angeordnet sind. Dadurch wird vorteilhaft ein besonders sicherer Sitz des Rohrs auf dem Zapfen erreicht.

Die Lehre der vorliegenden Erfindung umfaßt auch ein Verfahren zum Verbinden des vorab beschriebenen Formteils mit einem Rohr, das durch die folgenden Schritte gekennzeichnet ist:
das Rohr wird über den Zapfen geschoben,
das Rohr wird mit dem Zapfen in ein zweifach wirkendes Werkzeug mit zwei Stempeln eingelegt,
das Werkzeug wird so geschlossen, daß es das Rohr umgibt, wobei der Zapfen durch das Fangloch relativ zum Werkzeug fixiert wird, die beiden Stempel fahren zusammen,
das Rohr wird plastisch verformt, umschließt den Zapfen und nimmt im Bereich der Umformzone die Geometrie des Zapfens bzw. der Stempel an.

Der technische Vorteil von einer nach diesem verfahren hergestellten Verbindung eines Rohrs mit einem zapfen liegt darin, daß ein nahezu spannungsloser Gleichgewichtszustand im Rohr hergestellt wird. Das bedeutet, daß sich durch äußere Belastungen kein instabiler Spannungszustand einstellt, der zu einem unerwünschten Lösen der Verbindung führt.

Die erfindungsgemäße Lösung führt zu einer ausreichenden Plastifizierung, d.h. es wird ein guter Materialfluß und gleichzeitig eine gute Verfestigung erzielt. Dadurch werden ausreichende Kontaktzonen und ein stabiler Spannungszustand nach der Entlastung des Werkzeugs erreicht.

Weitere Vorteile, Merkmale und Einzelheiten der Erfindung ergeben sich aus den Unteransprüchen sowie der nachfolgenden Beschreibung, in der unter Bezugnahme auf die Zeichnung ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein. Ein Weg zum Ausführen der beanspruchten Erfindung ist nachfolgend anhand der Zeichnung im Einzelnen erläutert.

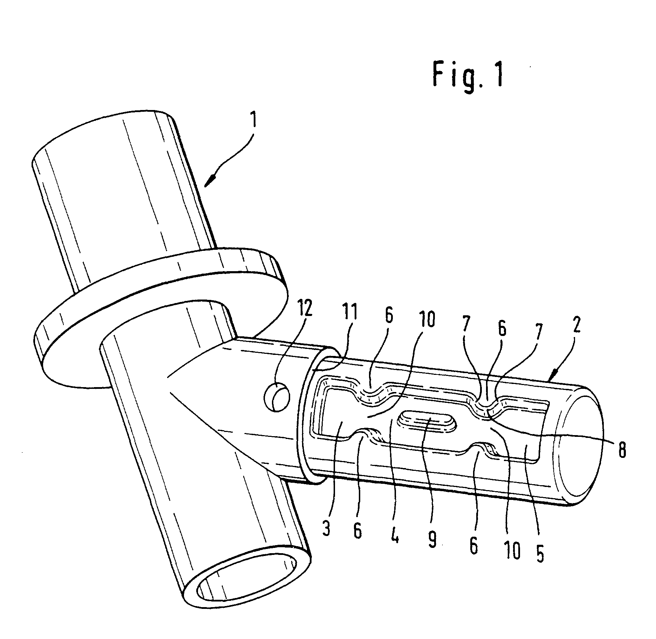

- Figur 1: zeigt eine perspektivische Darstellung eines erfindungsgemäßen Formteils.

Das mit 1 bezeichnete Formteil ist eine Lagerbuchse einer nicht dargestellten Scheibenwischanlage. An dem Formteil 1 ist ein zylinderförmiger Zapfen 2 ausgebildet, der zur Aufnahme eines nicht dargestellten Rohrs dient. Ein Ende des Rohrs wird durch Verkrimpen auf dem Zapfen 2 befestigt. Die Verkrimpung dient zur Übertragung von Kräften zwischen dem Formteil bzw. dem Zapfen und dem Rohr. Das andere Ende des Rohrs wird mit einem nicht dargestellten Trägerelement verbunden, auf dem der wischermotor angebracht ist.

In dem Zapfen 2 sind drei Mulden 3, 4 und 5 ausgebildet. Die Mulden 3, 4 und 5 sind durch Nasen 6 voneinander getrennt. Zwischen zwei benachbarten Mulden liegen sich jeweils zwei Nasen 6 gegenüber. Zwischen zwei sich gegenüberliegenden Nasen 6 ist jeweils ein Freiraum 10 ausgespart. Die Freiräume 10 verbinden die Mulden 3, 4 und 5 miteinander. Die Nasen 6 erstrecken sich vom Rand der Mulden quer zur Längsachse des Zapfens 2. Jede Nase weist zwei gegenüberliegende Nasenflügel 7 auf, die konkav gekrümmt sind. Die Nasenflügel 7 gehen in eine Nasenspitze 8 über, die konvex gekrümmt ist.

In der mittleren Mulde 4 ist parallel zur Längsachse des Zapfens 2 ein Stülpzug 9 ausgebildet. Der Stülpzug 9 erstreckt sich zwischen den Freiräumen 10 und hat etwa die gleiche Höhe wie die Nasen 6.

Zum Verbinden eines erfindungsgemäßen Formteiles 1 mit einem Rohr durch Verkrimpen wird entweder der Zapfen 2 des Formteiles 1 in das Ende des Rohres eingesteckt oder das Ende des Rohres auf den Zapfen 2 des Formteiles 1 aufgesteckt bis eine den Erfordernissen entsprechende Einstecktiefe des Zapfens 2 erreicht ist. Die erforderliche Einstecktiefe des Zapfens 2 kann beispielsweise durch einen an dem Formteil 1 vorgesehenen Anschlagring 11 definiert sein, der dann am Ende des Rohres anschlägt. Dann wird das Rohr mit dem Zapfen 2 in ein nicht dargestelltes zweifach wirkendes Werkzeug mit zwei Stempeln eingelegt. In einer ersten Stufe schließt das werkzeug so, daß das Rohr vom Werkzeug umschlossen wird. Dabei wird die Fixierung des Zapfens 2 in dem Werkzeug durch ein Fangloch 12 erreicht, das in der Nähe des Anschlagrings 11 in dem Formteil 1 angebracht ist. Durch das Fangloch 12 wird eine exakte Positionierung der Stempel relativ zu dem Zapfen 2 gewährleistet, was ausschlaggebend für die Qualität der Verkrimpung ist. In einer zweiten Stufe fahren die beiden Stempel des Werkzeugs aus entgegengesetzten Richtungen zusammen. Dabei wird das Rohr plastisch verformt und nimmt im Bereich der Umformzone die Geometrie des Zapfens 2 bzw. der Stempel an. Die Kontur der Stempel ist komplementär zu der Kontur des Zapfens 2 ausgebildet.

Die erfindungsgemäße Lösung kann auf beliebige Zapfen- oder Rohrdurchmesser übertragen werden.

### Bezugszeichenliste

- 1: Formteil
- 2: zapfen
- 3: Mulde
- 4: Mulde
- 5: Mulde
- 6: Nase
- 7: Nasenflügel
- 8: Nasenspitze
- 9: Stülpzug
- 10: Freiraum
- 11: Anschlagring
- 12: Fangloch

## Patentansprüche

1. Formteil (1) mit einem Zapfen (2) zur Verbindung mit einem Rohr, wobei der Zapfen (2) mehrere in Richtung seiner Längsachse angeordnete Mulden (3,4,5) aufweist, **dadurch gekennzeichnet, daß** zwei in Längsrichtung benachbarte Mulden (3, 4; 4, 5) jeweils durch zwei gegenüberliegende Nasen (6) voneinander getrennt sind, die sich quer zur Längsachse des Zapfens (2) erstrecken, wobei zwichen den gegenüberliegenden Nasen(6) ein Freiraum (10) ausgespart ist.

2. Formteil nach Anspruch 1, **dadurch gekennzeichnet, daß** die Nasen (6) jeweils zwei Nasenflügel (7) aufweisen, die ausgehend von den Rändern der Mulden (3, 4, 5) zunächst konkav und dann konvex gekrümmt sind.

3. Formteil nach einem der vorhergehenden Ansprüche, **dadurch gekennzeichnet, daß** der Zapfen mindestens drei Mulden (3, 4, 5) aufweist, und in der mittleren von den drei Mulden ein Stülpzug (9) in Längsrichtung des Zapfens (2) angeordnet ist.

4. Formteil nach einem der vorhergehenden Ansprüche, **dadurch gekennzeichnet, daß** in der Nähe des Zapfens (2) ein Fangloch (12) angeordnet ist.

5. Formteil nach einem der vorhergehenden Ansprüche, **dadurch gekennzeichnet, daß** die Mulden (3, 4, 5) auf gegenüberliegenden Seiten des Zapfenumfangs angeordnet sind.

6. Verfahren zum Verbinden eines Formteils (1) nach einem der Ansprüche 4 oder 5 mit einem Rohr, **gekennzeichnet durch** die folgenden Schritte:
das Rohr wird über den Zapfen (2) geschoben,
das Rohr wird mit dem Zapfen (2) in ein zweifach wirkendes Werkzeug mit zwei Stempeln eingelegt,
das Werkzeug wird so geschlossen, daß es das Rohr umgibt, wobei der Zapfen (2) **durch** das Fangloch (12) relativ zum Werkzeug fixiert wird, die beiden Stempel fahren zusammen, das Rohr wird plastisch verformt, umschließt den zapfen (2) und nimmt im Bereich der Umformzone die Geometrie des Zapfens (2) bzw. der Stempel an.

## Claims

1. A shaped part (1) with a spigot (2) for connecting to a tube, the spigot (2) comprising a plurality in the direction of a longitudinal axis arranged depressions (3, 4, 5), **characterized in that** two depressions (3, 4; 4, 5) adjacent to each other in longitudinal direction each being divided by two opposing projections (6), which extend transverse to the longitudinal axis of the spigot (2), wherein a clearance (10) is provided between the two opposing projections (6).

2. Shaped part according to claim 1, **characterized in that** the projections (6) each having two projection wings (7) extending out from the edges of the depressions (3, 4, 5) formed first concavely and then convexly curved.

3. Shaped part according to one of the preceding claims, **characterized in that** the spigot (2) having at least three depressions (3, 4, 5), and an inversion snub (9) running in the longitudinal direction of the spigot (2) formed in the one of the three depressions (3, 4, 5).

4. Shaped part according to one of the preceding claims, **characterized in that** a grasping aperture (12) is provided near the spigot (2).

5. Shaped part according to one of the preceding claims, **characterized in that** the three depressions (3, 4, 5) are formed on opposing sides of a circumference of the spigot (2).

6. A process for connecting a shaped part (1) according to one of claims 4 or 5 to a tube, **characterized by** the following steps:
slipping the tube over the spigot (2);
placing the tube together with the spigot (2) into a double-action tool with two crimpers;
closing the tool such that the tool encircles the tube, while the spigot (2) is fixed relative to the tool by the grasping hole (12) and the two crimpers come together; plastically deforming the tube so that the tube surrounds the spigot (2) and assumes the geometry of the spigot (2) or of the crimpers in the area of a deformation zone.

## Revendications

1. Pièce façonnée (1) avec un tenon (2) servant au raccordement à un tuyau, dans laquelle le tenon (2) comporte plusieurs cavités (3, 4, 5) disposées dans la direction de son axe longitudinal, **caractérisée en ce que** deux cavités contiguës dans le sens longitudinal (3, 4 ; 4, 5) sont respectivement séparées l'une de l'autre par deux ergots opposés (6) qui s'étendent perpendiculairement à l'axe longitudinal du tourillon (2), un espace (10) étant évidé entre les deux ergots opposés (6) .

2. Pièce façonnée selon la revendication 1, **caractérisée en ce que** les ergots (6) comportent respectivement deux ailes (7) qui sont courbées tout d'abord de manière concave puis de manière convexe à partir des bords des cavités (3, 4, 5).

3. Pièce façonnée selon l'une quelconque des revendications précédentes, **caractérisée en ce que** le tenon comporte au moins trois cavités (3, 4, 5) et, dans la cavité du milieu, un emboutissage par retournement (9) est disposé dans le sens longitudinal du tenon (2).

4. Pièce façonnée selon l'une quelconque des revendications précédentes, **caractérisée en ce qu'**un trou de positionnement (12) est disposé à proximité du tenon (2).

5. Pièce façonnée selon l'une quelconque des revendications précédentes, **caractérisée en ce que** les cavités (3, 4, 5) sont disposées sur des côtés opposés de la circonférence du tenon.

6. Procédé de raccordement d'une pièce façonnée (1), selon l'une des revendications 4 ou 5, à un tuyau, **caractérisé par** les étapes suivantes :
- le tuyau est passé par-dessus le tenon (2),
- le tuyau est inséré, avec le tenon (2), dans un outil à double action avec deux poinçons,
- l'outil est fermé de manière à ce qu'il entoure le tuyau, moyennant quoi le tenon (2) est fixé par rapport à l'outil par le biais du trou de positionnement (12), les deux poinçons se déplacent conjointement, le tuyau subit une déformation plastique, entoure le tenon (2) et prend, dans la zone de déformation, la géométrie du tenon (2) ou des poinçons.
